# EUROPÄISCHE PATENTANMELDUNG

(11) **EP 2 361 531 A1**
(43) Veröffentlichungstag der Anmeldung: **31.08.2011**
(21) Anmeldenummer: 10154054.0
(22) Anmeldetag: 19.02.2010
(51) Int. Cl.: A47B 96/14, F16B 7/04

(54) **Verbindungselement für zweireihige Wandschienen**

(71) Anmelder: Bohnacker Systeme GmbH, 89616 Rottenacker (DE)
(72) Erfinder: Karcher, Johann, 89597, Munderkingen (DE); Arbeiter, Hans-Jörg, 89616, Rottenacker (DE)
(74) Vertreter: Bergmeier, Werner

(57) **Zusammenfassung**

Die vorliegende Erfindung schlägt ein Verbindungselement zum Verbinden von zwei Wandschienen, die ein U-förmiges Profil, Schlitze entlang ihrer Längsrichtung in einem Mittelschenkel des U-förmigen Profils und nahe dem Ende der Wandschiene wenigstens eine in Bezug auf das U-förmige Profil nach innen gerichteten Vorsprung aufweisen, wobei die Schlitze in einem vorbestimmten Rastermaß angeordnet sind, vor. Das vorgeschlagene Verbindungselement weist ein U-förmiges Profilteil, das in die U-förmigen Wandschienen einsetzbar ist, und jeweils eine Aussparung an beiden Seiten des U-förmigen Profilteils auf, die so angeordnet sind, dass sie, wenn das Verbindungselement in eine Wandschiene eingesetzt ist, mit dem Vorsprung in der Wandschiene in Eingriff gelangt. Die Aussparungen des Verbindungselements sind dabei derart beabstandet, dass das Rastermaß entlang der zwei verbundenen Wandschienen fortgesetzt ist.

## Beschreibung

### Technisches Gebiet

Die vorliegenden Erfindung betrifft ein Verbindungselement für Wandschienen und insbesondere ein Verbindungselement zum Verbinden von zwei zweireihigen Wandschienen.

### Stand der Technik

Im Stand der Technik sind verschiedene Wandregalsysteme benannt Insbesondere sind Wandregale bekannt, die aus Wandschienen und Trägern bestehen, welche in die Wandschienen einhängbar sind. Je nach Bedarf können auf diese Träger dann sogenannte Fachböden aus Holz, Metall, Glas oder anderen Werkstoffen aufgelegt werden.

Die Wandschienen sind üblicherweise als ein U-förmiges Profil ausgebildet und weisen Schlitze in wenigstens einer Reihe entlang ihrer Längsrichtung auf, die in einem vorbestimmten Rastermaß angeordnet sind und in welche die Träger eingehängt werden.

Die Wandschienen und die Träger werden in verschiedenen Abmessungen hergestellt, um dem Endverbraucher die Möglichkeit zu geben, Wandregale in gewünschten Abmessungen erstellen zu können. Dazu werden Wandschienen mit unterschiedlichen Längen von wenigen Millimetern bis zu ca. 2,5 m und sogar darüber hinaus bereitgestellt.

In der Logistik führen jedoch Wandschienen ab einer bestimmten Länge zu Problemen, Beispielsweise weisen die in der Logistik üblicherweise verwendeten Europaletten lediglich eine Länge von 1200 mm auf, wodurch Wandschienen, welche länger als diese 1200 mm sind, über die Europaletten hinausragen und dadurch einer erhöhten Gefahr von Beschädigungen beispielsweise während des Transports vom Hersteller zum Endverbraucher ausgesetzt sind. Weiterhin führen solche Transporte in aller Regel auch zu höheren Transportkosten.

Darüber hinaus ist es insbesondere für den Endverbraucher meist problematisch, Wandschienen mit einer Länge von mehr als 1500 mm mit eigenen Mitteln, wie zum Beispiel einem PKW, zu transportieren, da solche PKW üblicherweise nicht über einen entsprechend langen Laderaum verfügen. Dadurch ist zu beobachten, dass Endverbraucher oft keine Wandschienen mit Längen von 2 m oder gar 2,5 m verwenden, sondern vielmehr Wandschienen mit kürzeren Längen bevorzugen. Dies ist auch bei "Aktionssets" und "Sonderangeboten", welche längere Schienen enthalten, zu beobachten, da in diesen Fällen der spontane Kaufentschluß oft wegen logistischer Probleme entweder überhaupt nicht fällt oder aber später rückgängig gemacht wird.

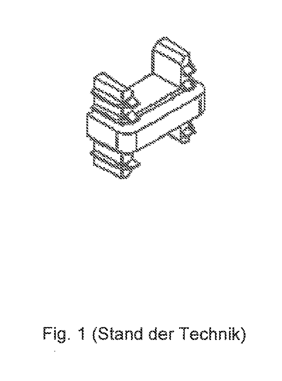

Damit jedoch die Möglichkeit erhalten bleibt, Wandregale mit gewünschten Abmessungen zu erstellen, sind Verbinder, wie in Figur 1 gezeigt, insbesondere für zweireihige Wandschienen, d.h. Wandschienen, die zwei parallel verlaufende Reihen von Schlitzen entlang ihrer Längsrichtung aufweisen, entwickelt worden. Diese Verbinder sind meist einfache Kunststoffteile, die einen Mittelbereich und sich von diesem Mittelbereich in entgegengesetzte Richtungen erstreckende Verlängerungen auf.

Die Form, die Gestaltung und der Abstand der Verlängerungen sind bei diesen Verbindern so gewählt, dass der Verbinder in der Wandschiene fixiert werden kann. Mit diesen Verbindern wird das Verbinden von zwei Wandschienen zwar erleichtert, da der Verbinder eine gewisse Hilfe dafür bereitstellt, aber eine Winkelabweichung zwischen den verbundenen Wandschienen kann aufgrund der Form und Gestaltung der Verlängerungen nicht verhindert werden. Darüber hinaus ist auch die Einhaltung des Rastermaßes über die Verbindung der zwei Wandschienen hinweg nicht sichergestellt. Ferner ist bekannt, dass diese Verbinder nicht bei sogenannten Hängeschienen verwendet werden können.

### Zusammenfassung der Erfindung

Es ist daher eine Aufgabe der vorliegenden Erfindung, ein Verbindungselement zum Verbinden von zwei Wandschienen bereitzustellen, mit dem das Rastermaß auch über die Verbindung der zwei Wandschienen hinweg beibehalten wird und ferner eine geradlinige Verbindung der zwei Wandschienen bei der Montage sichergestellt wird. Da zweireihige Wandschienen auch als Hängeschienen verwendet werden, also nur am oberen Ende in einer Wandleiste eingehängt werden, muss das Verbindungselement so gestaltet sein, dass auch Zugkräfte aufgenommen werden können.

Erfindungsgemäß wird diese Aufgabe durch ein Verbindungselement zum Verbinden von zwei Wandschienen, die ein U-förmiges Profil, Schlitze entlang ihrer Längsrichtung in einem Mittelschenkel des U-förmigen Profils und nahe dem Ende der Wandschiene wenigstens ein in Bezug auf das U-förmige Profil nach innen gerichteten Vorsprung aufweisen, dadurch gelöst, dass das Verbindungselement ein U-förmiges Profilteil, welches in die U-förmigen Wandschienen einsetzbar ist, und jeweils eine Aussparung an beiden Enden des U-förmigen Profilteils umfaßt. Die Aussparungen sind dabei so angeordnet, dass sie, wenn das Verbindungselement in eine Wandschiene eingesetzt ist, mit dem Vorsprung in der Wandschiene in Eingriff gelangt. Ferner sind die Aussparungen derart beabstandet, dass das Rastermaß entlang der zwei verbundenen Wandschienen fortgesetzt ist.

Insbesondere durch den Abstand zwischen den Aussparungen an beiden Seiten des U-förmigen Profilteils wird erreicht, dass das Rastermaß auch über die Verbindung der zwei Wandschienen hinweg fortgesetzt ist. Ferner wird durch das Bereitstellen von Aussparungen, welche in die nach innen gerichteten Vorsprünge der Wandschienen eingreifen, ermöglicht, dass das Verbindungselement und die Wandschienen leicht und sicher miteinander verbunden und das Zugkräfte aufgenommen werden können. Ebenso gewährleistet das Verbindungselement eine geradlinige Verbindung von zwei verbundenen Wandschienen.

In einer weiteren Ausführungsform kann das U-förmige Profilteil des Verbindungselements so ausgebildet sein, dass es sich um jeweils mehr als ein Rastermaß in die Wandschienen hinein erstreckt. Dadurch kann eine geradlinige Verbindung von zwei Wandschienen weiter verbessert werden.

Das Verbindungselement kann ferner jeweils wenigstens eine Gewindebohrung an den Seiten des U-förmigen Profilteils umfassen, die so angeordnet sind, dass sie, wenn das Verbindungselement in die Wandschiene eingesetzt ist, einer in der Wandschiene vorhandenen Bohrung gegenübersteht.

Dadurch können das Verbindungselement und die Wandschiene miteinander verbunden werden und es wird eine noch genauere Positionierung der Wandschienen gemäß dem Rastermaß und der geradlinigen Verbindung erzwungen.

Das U-förmige Profilteil des Verbindungselements kann um 180° gedreht in das U-förmige Profil der Wandschienen einsetzbar sein, wodurch eine weiter verbesserte Verbindung zwischen den Wandschienen und dem Verbindungselement bereitgestellt wird.

Vorzugsweise sind die Aussparung des Verbindungselements und die Vorsprünge der Wandschienen so ausgebildet, dass sie ineinander einrasten.

Dadurch wird ermöglicht, dass die Wandschienen und das Verbindungselement miteinander verbunden werden können, ohne dass die Wandschienen bzw. das Verbindungselement an eine Wand angebracht sein müssen.

In weiteren bevorzugten Ausführungsformen des Verbindungselements ist das U-förmige Profilteil aus einem Metall hergestellt. Vorzugsweise ist das Verbindungselement so gestaltet, dass es zum Verbinden von Wandschienen geeignet ist, die jeweils Schlitze in zwei parallel verlaufenden Reihen aufweisen.

### Kurzbeschreibung der Zeichnungen

Bevorzugte Ausführungsformen der Erfindung werden nachfolgend rein beispielhaft und ohne jegliche Beschränkung anhand der beigefügten Zeichnungen erläutert, in denen:
Figur 1 eine Perspektivansicht eines Verbinders gemäß dem Stand der Technik zeigt,
Figur 2 eine Perspektivansicht eines Verbinders gemäß einer Ausführungsform der vorliegenden Erfindung zeigt,
Figur 3 eine Perspektivansicht eines Verbinders gemäß der Ausführungsform von Figur 2 zeigt, der in einer zweireihigen Wandschiene eingesetzt ist,
Figur 4 eine Perspektivansicht von zwei mit einem Verbindungselement gemäß einer Ausführungsform der vorliegenden Erfindung verbundenen Wandschienen zeigt,
Figur 5 eine Darstellung ist, die zwei mit einem Verbindungselement gemäß einer Ausführungsform der vorliegenden Erfindung verbundenen Wandschienen in einer Schnittdarstellung der Wandschienen zeigt,
Figur 6 eine Schnittdarstellung von zwei mit einem Verbindungselement gemäß einer Ausführungsform der vorliegenden Erfindung verbundenen Wandschienen ist, und
Figur 7 eine Darstellung eines Verbindungselementes gemäß einer Ausführungsform der vorliegenden Erfindung in einer Front-, Seiten- und Draufsicht zeigt.

### Ausführliche Beschreibung bevorzugter Ausführungsformen

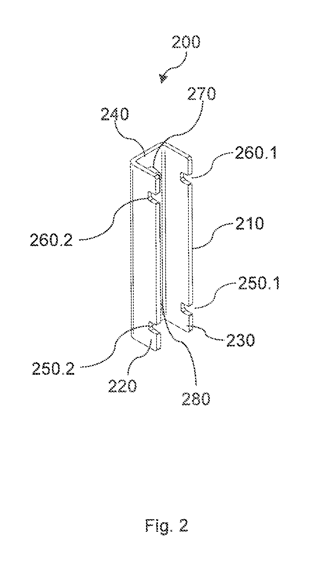

Eine bevorzugte Ausführungsform der vorliegenden Erfindung ist in Figur 2 gezeigt. Figur 2 ist eine Perspektivansicht eines Verbindungselements 200 der vorliegenden Erfindung zum Verbinden von zwei Wandschienen. Das Verbindungselement 200 umfaßt ein U-förmiges Profilteil 210, welches so gestaltet ist, dass es in eine Wandschiene, die ein U-förmiges Profil, Schlitze entlang ihrer Längsrichtung in einem Mittelschenkel des U-förmigen Profils und nahe dem Ende der Wandschiene wenigstens einen in Bezug auf das U-förmige Profil nach innen gerichteten Vorsprung aufweisen, einsetzbar ist.

Das U-förmige Profilteil 210 weist zwei Seitenschenkel 220, 230 und einen Mittelschenkel 240 auf, welcher die beiden Seitenschenkel 220, 230 verbindet. Der Mitelschenkel 240 ist dabei so gestaltet, dass, wenn das Verbindungselement 200 in eine Wandschiene eingesetzt wird, die beiden Seitenschenkel 220, 230 Seitenschenkeln der U-förmigen Wandschiene gegenüberstehen und vorzugsweise an diesen anliegen. Das U-förmige Profilteil 210 ist vorzugsweise aus einem Metall hergestellt.

Gemäß einer Ausführungsform ist dabei das U-förmige Profilteil um 180° gedreht in das U-förmige Profil der Wandschiene derart einsetzbar, dass der Mittelschenkel 240 des Verbindungselements 200 dem Mittelschenkel der Wandschiene gegenübersteht.

Darüber hinaus ist jeweils wenigstens eine Aussparung 250.1, 260.1 an beiden Enden des U-förmigen Profilteils 210 vorgesehen. In einer bevorzugten Ausführungsform ist jeweils eine Aussparung pro Seitenschenkel 220, 230 des U-förmigen Profilteils 210 vorgesehen. Die Aussparungen 250.1, 250.2. 260.1, 260.2 sind dabei so angeordnet, dass sie, wenn das Verbindungselement 200 in eine Wandschiene eingesetzt ist, mit den Vorsprüngen in der Wandschiene in Eingriff gelangen. Die Aussparungen 250.1 und 260.1 bzw. 250.2 und 260.2 sind dabei vorzugsweise so beabstandet, dass das vorbestimmte Rastermaß der Wandschienen über die Verbindung der beiden Wandschienen fortgesetzt ist.

Gemäß einer weiteren Ausführungsform können jeweils wenigstens eine Gewindebohrung 270, 280 an den Seiten des U-förmigen Profilteils 210 vorhanden sein, die so angeordnet sind, dass sie, wenn das Verbindungselement in die Wandschiene eingesetzt ist, einer in der Wandschiene vorhandenen Bohrung gegenüberstehen.

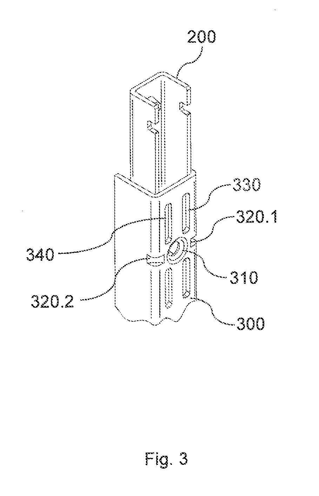

Figur 3 zeigt eine Perspektivansicht eines Verbindungselements 200, das in eine Wandschiene 300 eingesetzt ist. Das Verbindungselement 200 ist wie in Figur 2 gezeigt ausgebildet. Die Wandschiene 300 in Figur 3 ist eine zweireihige Wandschiene, welche Schlitze 330, 340 in zwei parallel verlaufenden Reihen aufweist. Ferner weist die Wandschiene eine Bohrung 310 und nach innen gerichtete Vorsprünge 320.1 und 320.2 auf. Die Vorsprünge 320.1, 320.2 gelangen mit den Aussparungen des Verbindungselements 200 in Eingriff. Ferner steht der Bohrung 310 die gemäß einer Ausführungsform der vorliegenden Erfindung vorgesehene Gewindebohrung in dem Verbindungselement 200 gegenüber.

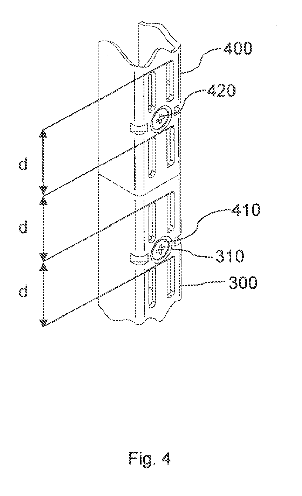

Figur 4 ist eine Perspektivansicht von zwei mit einem Verbindungselement 200 gemäß, einer Ausführungsform der vorliegenden Erfindung verbundenen Wandschienen 300, 400. In Figur 4 ist ferner gezeigt, dass das vorbestimmte Rastermaß d der Wandschienen 300, 400 auch über die Verbindung beider Wandschienen 300, 400 fortgesetzt ist. Darüber hinaus ist in Figur 4 gezeigt, dass die Wandschienen 300, 400 vorzugsweise mittels Verschraubungen 410, 420 durch die Bohrungen 310, 430 beispielsweise an einer Wand anbringbar sind.

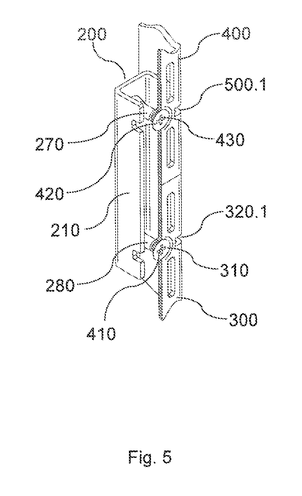

Figur 5 ist eine Darstellung, die zwei mit einem Verbindungselement 200 gemäß einer Ausführungsform der vorliegenden Erfindung verbundenen Wandschienen 300, 400 in einer Schnittdarstellung der Wandschienen 300, 400 zeigt. Das U-förmige Profilteil 210 des Verbindungselements 200 ist dabei, wie gemäß einer Ausführungsform bevorzugt, um 180° gedreht in das U-förmige Profil der Wandschienen 300, 400 eingesetzt. Darüber hinaus, wie in Figur 4 gezeigt, greifen die nach innen gerichteten Vorsprünge 320.1, 500.1 der Wandschienen 300, 400 in die Aussparungen 250.1, 260.1 des Verbindungselements 200 ein.

Ferner weist das Verbindungselement 200 Gewindebohrungen 270, 280 auf, welche Bohrungen 310, 430 der Wandschienen 300, 400 gegenüberstehen. Die Gewindebohrungen 270, 280 des Verbindungselements 200 können sich gemäß einer bevorzugten Ausführungsform in Richtung der Bohrungen 310, 430 der Wandschienen 300, 400 verlängern. Mittels dieser verlängerten Gewindebohrungen 270, 280 wird, wie in Figur 5 gezeigt, eine Führung für die Verschraubungen 410, 420 bereitgestellt.

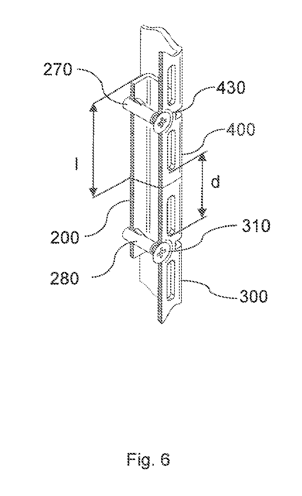

Figur 6 zeigt eine Schnittdarstellung von zwei mit einem Verbindungselement 200 gemäß einer Ausführungsform der vorliegenden Erfindung verbundenen Wandschienen 300, 400. In einer bevorzugten Ausführungsform erstreckt sich das Verbindungselement 200 jeweils in jeder Wandschienen um mehr als ein Rastermaß. Die Länge l ist vorzugsweise gleich oder größer als das Rastermaß d.

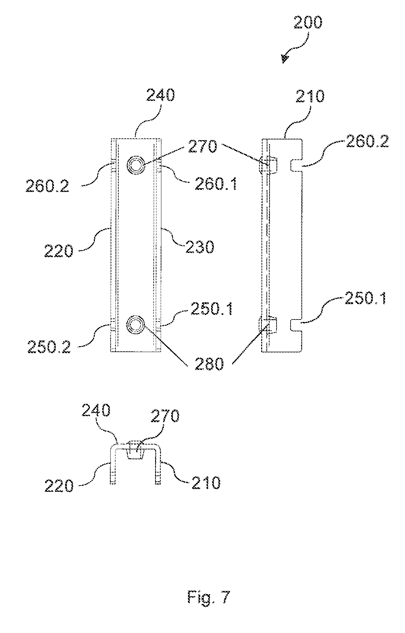

Figur 7 zeigt eine Darstellung eines Verbindungselements 200 gemäß einer Ausführungsform der vorliegenden Erfindung in einer Front- Seiten- und Draufsicht. Das Verbindungselement 200 umfasst das U-förmige Profilteil 210, welches zwei Seitenschenkel 220, 230 und einen Mittelschenkel 240 aufweist. Ferner sind die Aussparungen 250.1, 250.2, 260.1, 260.2 gezeigt, welche jeweils an beiden Seiten des U-förmigen Profilteils 210 in den Seitenschenkeln 220, 230 angeordnet sind. In dem Verbindungselement 200 sind ferner Gewindebohrungen 270, 280 vorgesehen, welche vorzugsweise so gestaltet sind, dass sie sich in eine Richtung verlängern. Darüber hinaus sind gemäß einer bevorzugten Ausführungsform die Aussparungen, wie zum Beispiel die Aussparungen 260.1 und 260.2, und die Gewindebohrung, wie zum Beispiel die Gewindebohrung 270, im gleichen Abstand vom Ende des Verbindungselements angeordnet.

Gemäß einer - nicht gezeigten - Ausführungsform sind die Aussparungen des Verbindungselements 200 und die nach innen gerichteten Vorsprünge 320.1, 320.2, 500.1 der Wandschienen 300, 400 derart gestaltet, dass sie ineinander einrasten, wenn das Verbindungselement 200 in die Wandschienen 300, 400 eingesetzt ist.

## Patentansprüche

1. Verbindungselement zum Verbinden von zwei Wandschienen, die ein U-förmiges Profil, Schlitze entlang ihrer Längsrichtung in einem Mittelschenkel des U-förmigen Profils und nahe dem Ende der Wandschiene wenigstens einen in Bezug auf das U-förmige Profil nach innen gerichteten Vorsprung aufweisen, wobei die Schlitze in einem vorbestimmten Rastermaß angeordnet sind, wobei das Verbindungselement umfasst:
ein U-förmiges Profilteil, das in die U-förmigen Wandschienen einsetzbar ist; und
jeweils eine Aussparung an beiden Seiten des U-förmigen Profilteils, die so angeordnet ist, dass sie, wenn das Verbindungselement in eine Wandschiene eingesetzt ist, mit dem Vorsprung in der Wandschiene in Eingriff gelangt, und
wobei die Aussparungen derart beabstandet sind, dass das Rastermaß entlang der zwei verbundenen Wandschienen fortgesetzt ist.

2. Verbindungselement nach Anspruch 1, wobei das U-förmige Profilteil so ausgebildet ist, dass es sich um jeweils mehr als ein Rastermaß in die Wandschienen hinein erstreckt.

3. Verbindungselement nach einem der vorhergehenden Ansprüche, ferner umfassend jeweils wenigstens eine Gewindebohrung an den Seiten des U-förmigen Profilteils, die so angeordnet ist, dass sie, wenn das Verbindungselement in die Wandschiene eingesetzt ist, einer in der Wandschiene vorhandenen Bohrung gegenübersteht.

4. Verbindungselement nach einem der vorhergehenden Ansprüche, wobei das Verbindungselement so ausgebildet ist, dass sich die zwei verbundenen Wandschienen geradlinig verlängern.

5. Verbindungselement nach einem der vorhergehenden Ansprüche, wobei die Wandschienen jeweils Schlitze in zwei parallel verlaufenden Reihen aufweisen.

6. Verbindungselement nach einem der vorhergehenden Ansprüche, wobei das U-förmige Profilteil um 180° gedreht in das U-förmige Profil der Wandschienen einsetzbar ist.

7. Verbindungselement nach einem der vorhergehenden Ansprüche, wobei die Aussparungen des Verbindungselements und die Vorsprünge der Wandschienen so ausgebildet sind, dass sie ineinander einrasten.

8. Verbindungselement nach einem der vorhergehenden Ansprüche, wobei das U-förmige Profilteil aus Metall ist.
